# EUROPEAN PATENT SPECIFICATION

(11) **EP 2 732 901 B1**
(45) Date of publication and mention of the grant of the patent: **08.08.2018**
(21) Application number: 12811337.0
(22) Date of filing: 26.06.2012
(51) Int. Cl.: B23K 9/073, B23K 9/12

(54) **ARC WELDING CONTROL METHOD AND ARC WELDING DEVICE**
VERFAHREN ZUR STEUERUNG EINER LICHTBOGENSCHWEISSUNG UND LICHTBOGENSCHWEISSVORRICHTUNG
PROCÉDÉ DE COMMANDE DE SOUDAGE À L'ARC ET DISPOSITIF DE SOUDAGE À L'ARC

(30) Priority: 12.07.2011 JP 2011153580
(43) Date of publication of application: 21.05.2014
(73) Proprietor: Panasonic Intellectual Property Management Co., Ltd., Osaka-shi, Osaka 540-6207 (JP)
(72) Inventor: FUJIWARA, Junji, Chuo-ku, Osaka-shi, Osaka 540-6207 (JP); KAWAMOTO, Atsuhiro, Chuo-ku, Osaka-shi, Osaka 540-6207 (JP); KOWA, Masaru, Chuo-ku, Osaka-shi, Osaka 540-6207 (JP)
(74) Representative: Vigand, Philippe
(86) International application number: PCT/JP2012/004122
(87) International publication number: WO 2013/008394

(56) References cited:
- EP-A1- 2 455 177
- WO-A1-2007/094090
- WO-A1-2011/013321
- JP-A- 62 006 775
- JP-A- 2008 542 027
- US-A1- 2008 314 884
- US-A1- 2009 026 188

## Description

### BACKGROUND

### 1. Technical Field

The present invention relates to an arc welding control method and also to an arc welding device in which short-circuit welding is performed while a welding wire is continuously fed as a consumable electrode. An arc welding control method reflecting the preamble of present claim 1 is disclosed by the document US 2008/314884.

### 2. Background Art

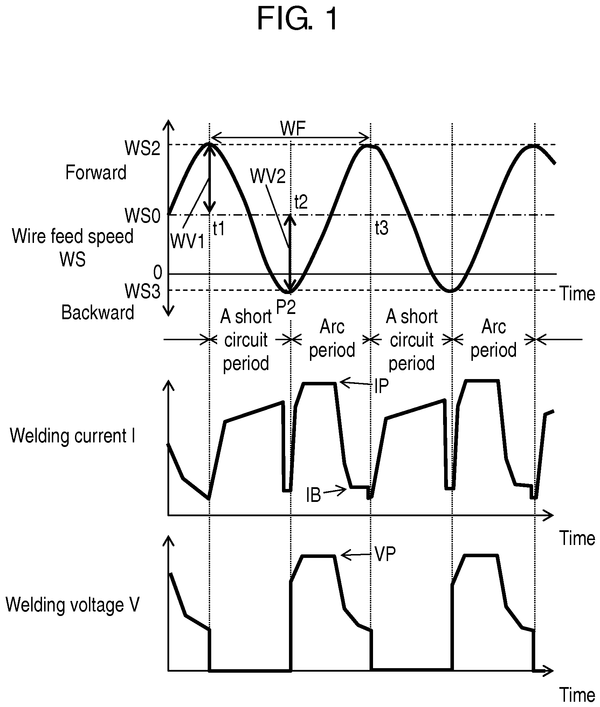

Fig. 1 shows output waveforms when a welding wire is fed periodically according to a conventional method of controlling wire feeding in arc welding with short-circuits. Specifically, Fig. 1 shows the time waveforms of a wire feed speed WS, a welding current I, and a welding voltage V.

In Fig. 1, a time point t1 is the time when a short circuit occurs. In a short circuit period starting at the time point t1, the arc welding device first outputs an initial short-circuit current for a predetermined time, next outputs a first increase slope di/dt of the short-circuit current as the welding current I, then outputs a second increase slope di/dt of the short-circuit current. Immediately upon detecting the neck of the droplet formed between the weld pool and the tip of the welding wire, the arc welding device reduces the welding current I to a lower level. A time point P2 is the time when the neck of the droplet comes off, that is, when the short-circuit state is ended and an arc is created.

Immediately after the arc is created at the time point P2 at which the arc period is started, the arc welding device outputs a peak current. Then, the arc welding device reduces the peak current IP to a base current IB. In the arc period, the arc welding device can be either current-controlled or voltage controlled. When a transition is made to the base current, the next short circuit is waited for. A time point t3 is the time when the next short circuit occurs.

The welding wire is fed in periodically alternating forward and backward directions at a predetermined frequency and a predetermined velocity amplitude in the form of a sine wave, which is a basic waveform to feed the wire. At or around the time point t1, which is the peak in the forward direction, a short circuit occurs. At or around the time point P2, which is the peak in the backward direction, an arc is created. At or around the time point t3, which is the peak in the forward direction after the time point P2, the next short circuit occurs. In this manner, welding is performed by repeating the periods from the time point t1 to the time point P3, which is defined as a cycle WF of control.

Thus, the occurrence of a short-circuit state and an arc state basically depends on the wire feed control where the welding wire is fed in periodically alternating forward and backward directions.

The above-described conventional control is based on a control method which feeds the welding wire in periodically alternating forward and backward directions sinusoidally, thereby periodically alternating the generation of a short-circuit state and an arc state. In this control method, a frequency and a velocity amplitude are set with reference to the average of the wire feed speed suitable to a set current, so that this method can be applied to the case of using either low or high current (see, for example, Patent Literature 1).

Feeding the welding wire in a sinusoidal waveform places a smaller burden on motor peripheral components such as a wire feed motor and gears than feeding the wire in a rectangular waveform, thereby extending their useful lives.

In the above-described conventional method of controlling wire feeding, as shown in Fig. 1, a short circuit occurs at or around the time point t1, which is the peak in the forward direction, and an arc is created at or around the time point P2, which is the peak in the backward direction. The next short circuit occurs at or abound the time point t3, which is the peak in the forward direction after the time point P2. In this manner, welding is performed by repeating the periods from the time point t1 to the time point t3, which is defined as the cycle WF of control. As a result, the time ratio of (a short circuit period from a time t1 to a time t2) to (an arc period from the time t2 to a time t3) is 50:50. In contrast, in general short-circuit welding where a welding wire is fed not periodically but constantly, the ratio of a short circuit period to an arc period is in the range of 20:80 to 30:70.

Thus, in the conventional arc welding control method where the welding wire is fed in periodically alternating forward and backward directions, the short circuit period accounts for 50%, which is larger than in the general short-circuit welding. This means that the arc period accounts for a lower percentage, making it difficult to have a high welding voltage. As a result, the conventional arc welding control method provides unsatisfactory welding results such as a low heat input to the object-to-be-welded, a small width of bead, and a low penetration of bead. Thus, this conventional method where the welding wire is fed in periodically alternating forward and backward directions can stabilize arcs and reduce bead defects, spatters, and poor penetration (penetration variations); however, it is difficult for this method to have a high welding voltage. As a result, this conventional method cannot provide as large a width of bead or as deep a penetration of bead as in the general short-circuit welding.

### Citation List

### Patent Literature

Patent Literature 1: WO2011/013321

Further art is disclosed by the document US 2009/26188.

### SUMMARY

The present invention is directed to provide an arc welding control method and also to provide an arc welding device in which a welding wire is fed periodically in such a manner as to provide a properly high welding voltage, thereby ensuring a large width of bead and a deep penetration of bead.

The arc welding control method according to the present invention is defined in the appended claims and is a method of controlling consumable electrode arc welding in which short-circuit welding is performed by alternating short-circuits and arcs while the welding wire is fed automatically. In this method, a short-circuit state and an arc state are alternately generated by feeding the welding wire in periodically alternating forward and backward directions at a predetermined frequency and a predetermined velocity amplitude with reference to the basic wire feed speed based on the set current. In this method, the speed of periodic feeding of the welding wire is controlled in such a manner that the waveform to feed the wire is different between the forward and backward directions.

This method can provide a properly high welding voltage, thereby ensuring a large width of bead and a deep penetration of bead.

The arc welding device according to the present invention performs welding by alternately generating arcs and short circuits between an object-to-be-welded and a welding wire used as a consumable electrode, the arc welding device is defined in the appended claims and comprises: a welding condition setting unit; a wire feed motor; a switching unit; a welding voltage detector; a short-circuit/arc detector; a short-circuit controller; an arc controller; a drive unit; and a wire-feed-motor controller. The welding condition setting unit sets at least a set current. The wire feed motor feeds the welding wire. The switching unit controls a welding output. The welding voltage detector detects a welding voltage. The short-circuit/arc detector detects whether the welding process is in a short-circuit state or in an arc state based on the output of the welding voltage detector. The short-circuit controller outputs a welding output control signal indicating that the welding process is in the short-circuit state. The arc controller outputs a welding output control signal indicating that the welding process is in the arc state. The drive unit controls the switching unit based on one of the signal from the short-circuit controller and the signal from the arc controller. The wire-feed-motor controller controls the wire feed motor in such a manner that the welding wire is fed in periodically alternating forward and backward directions at a predetermined frequency and a predetermined velocity amplitude. The wire-feed-motor controller includes a basic wire feed speed controller; a motor polarity switching controller, a wire-feed velocity amplitude controller, and a wire feed speed/frequency controller. The basic wire feed speed controller outputs a basic wire feed speed based on the set current, the basic wire feed speed being a reference of the periodic feeding of the welding wire. The motor polarity switching controller outputs a signal indicating the direction of rotation of the wire feed motor, the direction of rotation corresponding to one of the forward and backward directions in which the welding wire is fed. The wire-feed velocity amplitude controller outputs a velocity amplitude in the backward direction with reference to the basic wire feed speed, and a velocity amplitude in the forward direction smaller than the velocity amplitude in the backward direction. The wire feed speed/frequency controller output a wire feed frequency based on the set current. The wire-feed-motor controller controls the wire feed motor based on the basic wire feed speed, the signal indicating the direction of rotation of the wire feed motor, the velocity amplitudes in the forward and backward directions in which the welding wire is fed, and the wire feed frequency. This allows the arc welding device of the present invention to control the speed of periodic feeding of the welding wire in such a manner that the waveform to feed the welding wire is different between the forward and backward directions.

In this configuration, the welding wire is fed periodically in ensuring a large width of bead and a deep penetration of bead.

Furthermore, this configuration achieves an arc welding device that provides as high welding performance as short-circuit welding, such a manner as to provide a properly high welding voltage, thereby ensuring a large width of bead and a deep penetration of bead.

Furthermore, this configuration achieves an arc welding device that provides as high welding performance as short-circuit welding, such as a large width of bead or a deep penetration of bead.

### BRIEF DESCRIPTION OF DRAWINGS

Fig. 1 shows time waveforms of a wire feed speed, a welding current, and a welding voltage in a conventional method of controlling the periodic feeding of a welding wire when the wire is fed at the same velocity amplitude between the forward and backward directions.
Fig. 2 shows time waveforms of a wire feed speed, a welding current, and a welding voltage according to a first exemplary embodiment of the present invention.
Fig. 3 shows the relation between the ratio of a short circuit period to an arc period and the amplitude in the forward direction according to the first exemplary embodiment of the present invention.
Fig. 4 shows an example of arc welding according to the first exemplary embodiment of the present invention in comparison with an example of short-circuit welding and an example of a conventional control.
Fig. 5 shows a schematic configuration of the arc welding device according to the first and second exemplary embodiments of the present invention.
Fig. 6 shows time waveforms of a wire feed speed, a welding current, and a welding voltage in a conventional method of controlling the periodic feeding of a welding wire when the wire is fed at the same velocity amplitude between the forward and backward directions.
Fig. 7 shows time waveforms of a wire feed speed, a welding current, and a welding voltage according to the second exemplary embodiment of the present invention.

### DESCRIPTION OF EMBODIMENTS

Exemplary embodiments of the present invention will now be described with reference to drawings. In these drawings, the same components are denoted by the same reference numerals, and the description thereof may be omitted.

### FIRST EXEMPLARY EMBODIMENT

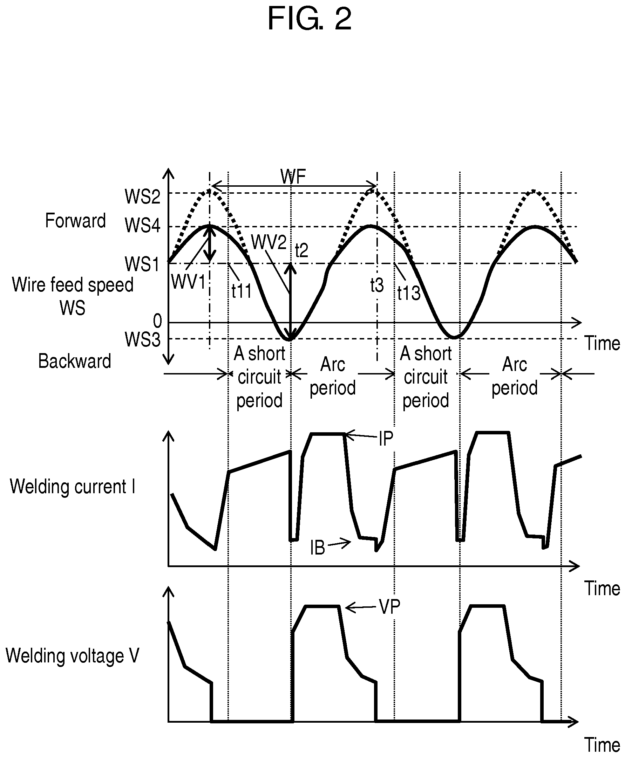

Fig. 1 shows time waveforms of a wire feed speed, a welding current, and a welding voltage in a conventional method of controlling the periodic feeding of a welding wire when the wire is fed at the same velocity amplitude between the forward and backward directions. Fig. 2 shows output waveforms in the arc welding control method with short-circuits by an arc welding device according to the first exemplary embodiment of the present invention. The waveforms shown in Fig. 2 include a wire feed speed, a welding current, and a welding voltage according to the first exemplary embodiment. The effect of the control according to the present first exemplary embodiment shown in Fig. 2 will be described in comparison with the conventional control shown in Fig. 1.

Figs. 1 and 2 show changes with time in a wire feed speed WS, a welding voltage V, and a welding current I.

The wire feed control shown in Fig. 1 is basically performed as follows. With reference to Fig. 1, in a short circuit period from the time t1 to the time t2, the feeding of a welding wire is shifted from the forward direction at a wire feed speed WS2 to the backward direction at a wire feed speed WS3 with reference to an average wire feed speed WS0. In an arc period from the time t2 to the time t3, the feeding of the wire is shifted from the backward direction at the wire feed speed WS3 to the forward direction at the wire feed speed WS2.

The wire feed control shown in Fig. 2 is basically performed as follows. With reference to Fig. 2, in a short circuit period from a time t11 to the time t2, the feeding of a welding wire is shifted from the forward direction at a wire feed speed WS4 to the backward direction at the wire feed speed WS3 with reference to a basic wire feed speed WS1, which is determined based on the set current. In an arc period from the time t2 to a time t13, the feeding of the wire is shifted from the backward direction at the wire feed speed WS3 to the forward direction at the wire feed speed WS4. The basic wire feed speed WS1 is determined based on the set current. It is obvious that the set current set before welding is started, the wire feed speed, and the amount of wire feed are in proportion to each other. Hence, the basic wire feed speed WS1 can be determined based on the set wire feed speed or the set amount of wire feed, instead of the set current.

The conventional control of the periodic feeding of a welding wire shown in Fig. 1 will be described first, followed by the control of the periodic feeding of a welding wire according to the first exemplary embodiment of the present invention shown in Fig. 2.

In Fig. 1 showing the conventional control, in the short circuit period from the time t1 to the time t2, the time t1 is the time when the welding wire and the weld pool are securely short circuited. Toward the time t2, the feeding of the wire is shifted from the forward direction at the wire feed speed WS2 to the backward direction at the wire feed speed WS3 in order to facilitate the opening of the short circuit.

In the short circuit period (current control only), current control is performed in such a manner that the welding current I is increased with a predetermined slope from the time t1 when the short circuit occurs. Immediately before the short circuit period ends, that is, immediately before the time t2, the neck of the molten welding wire is detected and the welding current I is rapidly decreased to reduce spatters as conventionally known.

In the arc period from the time t2 to the time t3, the time t2 is the time when an arc is created (the short circuit is opened). Toward the time t3, the feeding of the wire is shifted from the backward direction at the wire feed speed WS3 to the forward direction at the wire feed speed WS2 in order to facilitate the opening of the short circuit.

In the arc period (both current control and voltage control), current control is performed in such a manner that the welding current I is increased with a predetermined slope from the time t2 when an arc occurs. Then, voltage control is performed in such a manner that the welding current I is outputted in order to output a basic welding voltage VP. Thus, the voltage control allows the outputting of the welding current I. The voltage control can maintain an arc length, and hence can maintain an arc state which is unlikely to cause a minor short circuit. When a predetermined time has passed since the start of an arc, the voltage control is switched to the current control, and the welding current I is reduced to the base current IB, which is 100 A or less where large-sized spatters are unlikely to be caused by a minor short circuit.

Thus, the welding current I is decreased with the predetermined slope to the base current IB when the predetermined time has passed since the start of an arc. This allows the welding current in the arc state to be changed slowly. The value of the base current IB can be determined to be suitable for a workpiece by, for example, experiments. Maintaining the welding current I at the base current IB has the effect of facilitating the occurrence of a short circuit and preventing the generation of large-sized spatters even when a minor short circuit occurs.

The conventional arc welding control method repeats the cycle of periodically alternating the short circuit period and the arc period.

The control according to the present first exemplary embodiment shown in Fig. 2 will be described in comparison with the conventional control shown in Fig. 1.

Fig. 2 shows an example of time waveforms of the wire feed speed WS, the welding current I, and the welding voltage V. In this example, the wire is fed in the backward direction at a velocity amplitude WV2 with reference to the basic wire feed speed WS1 based on the set current, and is fed in the forward direction at a velocity amplitude WV1, which is 0.5 times the velocity amplitude WV2. The velocity amplitude WV1 corresponds to the forward direction with reference to the basic wire feed speed WS1, and the velocity amplitude WV2 corresponds to the backward direction with reference to the basic wire feed speed WS1.

The welding control will not be described because it is the same as the conventional control described with reference to Fig. 1, and the following description will be focused on the wire feed control.

In the case of the conventional wire feed speed, as shown in Fig. 1, the short circuit period is from the time t1 to the time t2. In the case of the wire feed speed in the present first exemplary embodiment shown in Fig. 2, the velocity amplitude WV1 in the forward direction is smaller than the velocity amplitude shown by the broken line, and the wire feed speed WS4 in the forward direction is lower than the wire feed speed WS2 shown by the broken line. Thus, the occurrence of a short circuit can be delayed from the time t1 to the time t11. As a result, the short circuit period is from the time t11 to the time t2 as shown in Fig. 2, which is shorter than the short circuit period in the conventional control, which is from the time t1 to the time t2 shown in Fig. 1.

On the other hand, in the arc period, the occurrence of a short circuit is delayed from the time t3 to the time t13 as shown in Fig. 2 by reducing the velocity amplitude WV1 in the forward direction. As a result, the arc period is from the time t2 to the time t13 as shown in Fig. 2, which is larger than in the case shown in Fig. 1.

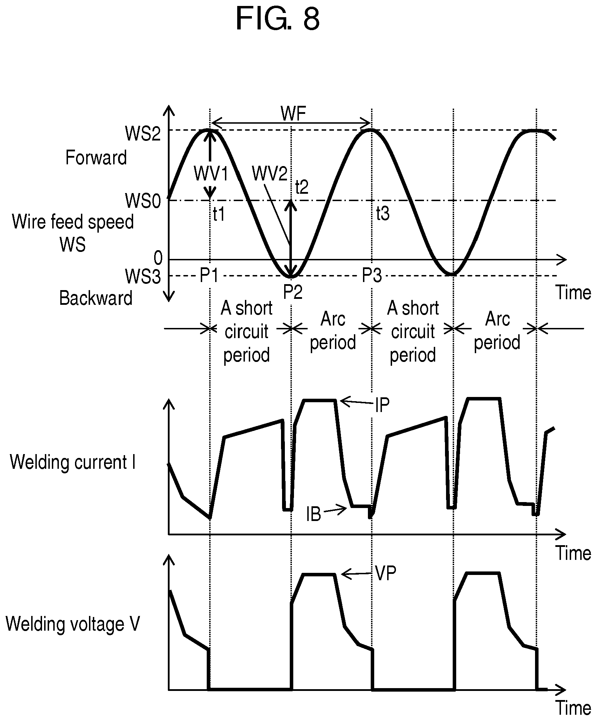

As described above, controlling the velocity amplitude at which the wire is fed can change the ratio of the short circuit period to the arc period from 50:50 (= 1) as in the conventional control shown in Fig. 1 to 30:70 (= 3/7) as in the present first exemplary embodiment shown in Fig. 2.

Thus, making the velocity amplitude WV1 in the forward direction smaller than the velocity amplitude WV2 in the backward direction with reference to the basic wire feed speed WS1 can change the ratio of the short circuit period to the arc period. This provides a properly high welding voltage and a deep penetration of bead.

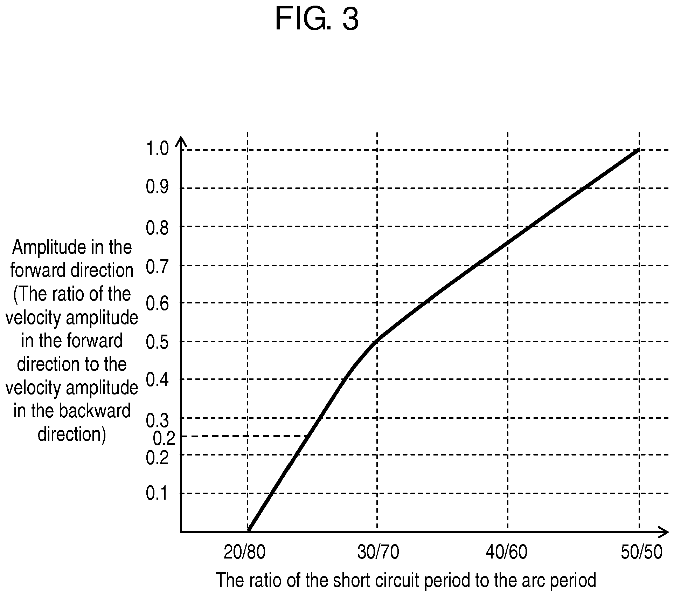

Fig. 3 shows the ratio of the short circuit period to the arc period in the case where the velocity amplitude WV1 in the forward direction with reference to the basic wire feed speed WS1 is made smaller than the velocity amplitude WV2 in the backward direction. In Fig. 3, the horizontal axis represents the ratio of the short circuit period to the arc period. The vertical axis represents the amplitude in the forward direction, which is expressed as the ratio (1 or less) of the velocity amplitude in the forward direction to the velocity amplitude in the backward direction. Fig. 3 shows an example of the relation between the ratio of the short circuit period to the arc period and the amplitude in the forward direction in the case of using MAG welding and a welding wire having a diameter of Φ 1.2 mm.

As shown in Fig. 3, when the velocity amplitude WV1 in the forward direction with reference to the basic wire feed speed WS1 is 1.0 times the velocity amplitude WV2 in the backward direction, the ratio of the short circuit period to the arc period is about 50:50. When the velocity amplitude WV1 is 0.75 times the velocity amplitude WV2, the ratio of the short circuit period to the arc period is about 40:60. When the velocity amplitude WV1 is 0.5 times the velocity amplitude WV2, the ratio of the short circuit period to the arc period is about 30:70. When the velocity amplitude WV1 is 0.25 times the velocity amplitude WV2, the ratio of the short circuit period to the arc period is about 25:75.

The small ratio of the velocity amplitude WV1 in the forward direction to the velocity amplitude WV2 in the backward direction with reference to the basic wire feed speed WS1 can be determined based on at least one of the following: the set current; the diameter, the type, and the extension of the welding wire; and the shielding gas to be used. This method provides a properly high welding voltage, thereby ensuring a large width of bead and a deep penetration of bead.

The ratio can be previously determined in the form of a table or a mathematical formula by, for example, experiments based on these welding conditions.

Obviously, the wire feed speed WS4 in the forward direction decreases as the velocity amplitude WV1 in the forward direction is smaller than the velocity amplitude WV2 in the backward direction with reference to the basic wire feed speed WS1. In other words, the wire feed speed WS4 decreases as the ratio of the velocity amplitude WV1 to the velocity amplitude WV2 is smaller. Hence, it is necessary to increase the basic wire feed speed WS1 in order that the average feed speed obtained when the wire feed speed WS4 in the forward direction is reduced is made equal to the average feed speed obtained when the velocity amplitude in the forward direction is not reduced. As obvious from Fig. 2, the basic wire feed speed WS1 is not the average feed speed.

For example, in MAG welding using a welding wire made of mild steel with a diameter of Φ 1.2 mm and a set current of 200 A, the basic wire feed speed WS1 is 4.8 m/min in the conventional control, and is 5.4 m/min in the control according to the present first exemplary embodiment.

When it is in the range of 10 to 30 m/min in the conventional control, the velocity amplitude WV1 is in the range of 5 to 15 m/min in the control according to the present first exemplary embodiment where the ratio of the velocity amplitude in the forward direction is 0.5 times that in the backward direction.

Hence, even if the basic wire feed speed WS1 is increased to make the average feed speed equal between when the wire feed speed WS4 is reduced and when not, it is very effective to reduce the velocity amplitude WV1 in the forward direction in order to delay the occurrence of a short circuit.

The velocity amplitude WV1 in the forward direction can be made smaller than the velocity amplitude WV2 in the backward direction by the following approach: the velocity amplitude WV1 with reference to the basic wire feed speed WS1 is set to 1, and then the velocity amplitude WV2 is set to the product of the velocity amplitude WV1 and a ratio larger than 1.

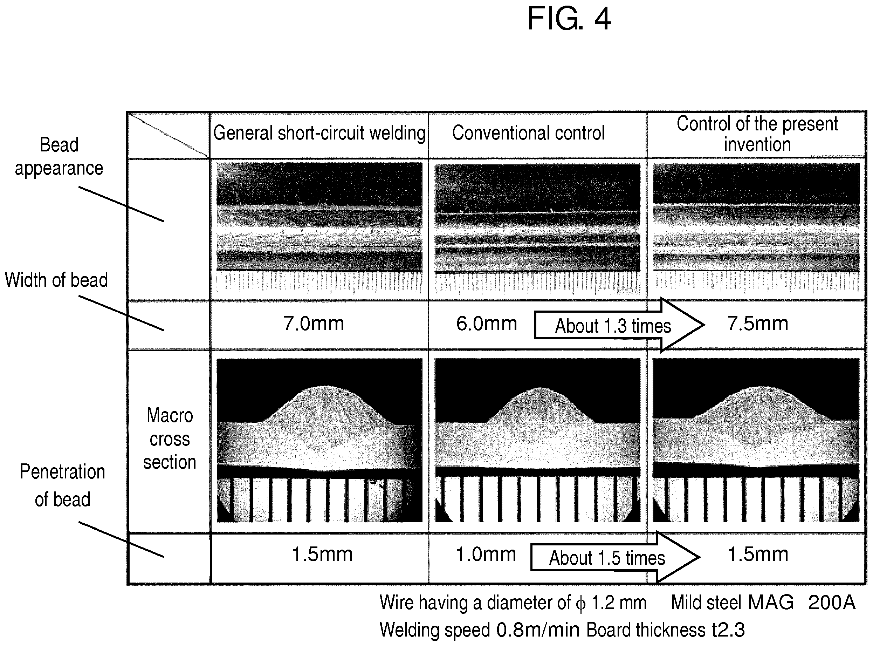

An example of arc welding to show the effect of the control according to the present first exemplary embodiment will now be described with reference to Fig. 4. Fig. 4 shows an example of arc welding according to the first exemplary embodiment of the present invention in comparison with an example of short-circuit welding and an example of the conventional control.

Fig. 4 shows pictures of bead appearances and macro cross sections in the case where bead-on-plate-MAG welding is performed by using a welding wire made of mild steel with a diameter of Φ 1.2 mm and a set current of 200 A.

As shown in Fig. 4, the control according to the present first embodiment is compared with the conventional control (the wire is fed periodically and at the same velocity amplitude between the forward and backward directions) in which the ratio of the short circuit period to the arc period is 50:50. When the velocity amplitude WV1 in the forward direction is made 0.5 times the velocity amplitude WV2 in the backward direction according to the present first exemplary embodiment in which the ratio of the short circuit period to the arc period is 30:70, the width of bead can be increased to about 1.3 times, and the penetration of bead can be increased to about 1.5 times.

The control according to the present first exemplary embodiment can provide almost the same results about bead appearance (in this case, the width of bead) and the penetration of bead as those in the general short-circuit welding where a welding wire is fed not periodically but constantly as shown in Fig. 4.

In the control according to the present first exemplary embodiment, the ratio of the short circuit period to the arc period is adjusted by adjusting the velocity amplitude WV1 in the forward direction with reference to the basic wire feed speed WS1. The ratio can alternatively be adjusted by making the waveform of the wire feed speed different between the forward and backward directions. For example, the waveform can be sinusoidal in the forward direction, and can be trapezoidal in the backward direction.

As described above, the arc welding control method according to the present first exemplary embodiment is a method of controlling consumable electrode arc welding in which short-circuit welding is performed by alternating short-circuits and arcs while the welding wire is fed automatically. In this method, a short-circuit state and an arc state are alternately generated by feeding the welding wire in periodically alternating forward and backward directions at a predetermined frequency and a predetermined velocity amplitude with reference to the basic wire feed speed based on the set current. In this method, the speed of periodic feeding of the welding wire is controlled in such a manner that the waveform to feed the wire is different between the forward and backward directions.

In this method, the velocity amplitude WV1 in the forward direction with reference to the basic wire feed speed WS1 is made smaller than the velocity amplitude WV2 in the backward direction, so that the ratio of the short circuit period can be reduced to increase the ratio of the arc period. This method provides a properly high welding voltage and a deep penetration of bead. This method also ensures a large width of bead and a deep penetration of bead by providing welding performance similar to that of the general short-circuit welding where a welding wire is fed not periodically but constantly.

The speed of periodic feeding of the welding wire can be controlled in such a manner that the velocity amplitude is different between the forward and backward directions. This provides a properly high welding voltage, thereby ensuring a large width of bead and a deep penetration of bead.

Specifically, the velocity amplitude can be smaller in the forward direction than in the backward direction. This provides a properly high welding voltage, thereby ensuring a large width of bead and a deep penetration of bead.

The ratio of the short circuit period to the arc period can be adjusted by setting the velocity amplitude in the forward direction to the product of the velocity amplitude in the backward direction and a ratio smaller than 1, thereby making the velocity amplitude smaller in the forward direction than in the backward direction. This provides a properly high welding voltage, thereby ensuring a large width of bead and a deep penetration of bead.

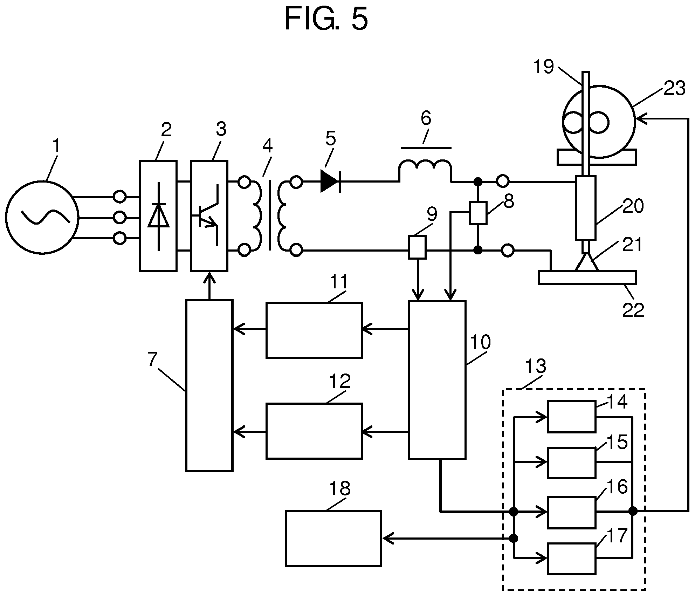

The arc welding device to perform the above-described arc welding control according to the present first exemplary embodiment will now be described with reference to Fig. 5. Fig. 5 shows a schematic configuration of the arc welding device according to the first exemplary embodiment of the present invention. The following description will be focused on wire feed control.

As shown in Fig. 5, the arc welding device includes primary rectifier 2 which rectifies electric power supplied from input power 1, switching unit 3, transformer 4, secondary rectifier 5, DCL 6, drive unit 7, welding voltage detector 8, welding current detector 9, short-circuit/arc detector 10, short-circuit controller 11, arc controller 12, wire-feed-motor controller 13, and welding condition setting unit 18. Switching unit 3 switches the output of primary rectifier 2 to AC power. Transformer 4 transforms the output of switching unit 3. Secondary rectifier 5 and DCL 6 rectify the output of transformer 4. Drive unit 7 controls switching unit 3. Welding voltage detector 8 detects a welding voltage. Welding current detector 9 detects a welding current. Short-circuit/arc detector 10 detects whether the welding process is in a short-circuit state or in an arc state based on at least one of the output of welding voltage detector 8 and the output of welding current detector 9. Short-circuit controller 11 controls a welding output in a short-circuit state. Arc controller 12 controls a welding output in an arc state. Wire-feed-motor controller 13 controls the feeding of welding wire 19. Welding condition setting unit 18 sets welding conditions such as the set current, the diameter of the welding wire, or the material of the welding wire.

As shown in Fig. 5, wire-feed-motor controller 13 includes basic wire feed speed controller 14, motor polarity switching controller 15, wire-feed velocity amplitude controller 16, and wire feed speed/frequency controller 17.

Welding wire 19 is fed by wire feed motor 23, and is supplied with electric power through chip 20. Welding arc 21 is generated between welding wire 19 and object-to-be-welded 22 to perform welding.

Chip 20 can be provided, for example, in an unillustrated welding torch attached to a manipulator of an unillustrated industrial robot, and the welding torch can be moved by the manipulator. In this case, all the components including primary rectifier 2 through welding condition setting unit 18 can be disposed in an unillustrated robot controller, which includes the industrial robot and controls the operation of the manipulator.

Welding voltage detector 8, which is connected between the power output terminals for welding, outputs a signal corresponding to a detected voltage. Short-circuit/arc detector 10 determines whether or not the welding output voltage equals to or exceeds a predetermined value based on the signal from welding voltage detector 8. Short-circuit/arc detector 10 determines whether welding wire 19 is in contact with and short circuited to object-to-be-welded 22, or is out of contact with object-to-be-welded 22 and welding arc 21 is present, based on the determination result. Short-circuit/arc detector 10 then outputs a determination signal.

The control of feeding welding wire 19 by wire-feed-motor controller 13 will now be described as follows.

Wire-feed-motor controller 13 includes basic wire feed speed controller 14, motor polarity switching controller 15, wire-feed velocity amplitude controller 16, and wire feed speed/frequency controller 17.

Basic wire feed speed controller 14 outputs the basic wire feed speed WS1, which is the reference of the periodic feeding of the welding wire. Basic wire feed speed controller 14 includes a table or a mathematical formula to associate the set current with the basic wire feed speed WS1. The basic wire feed speed WS1 is determined based on the set current set by welding condition setting unit 18. The relation between the set current and the basic wire feed speed WS1 can be predetermined by, for example, experiments.

Wire-feed velocity amplitude controller 16 outputs the velocity amplitude WV2 in the backward direction with reference to the basic wire feed speed WS1 and the velocity amplitude WV1 in the forward direction with reference to the basic wire feed speed WS1. Wire-feed velocity amplitude controller 16 includes a table or a mathematical formula to associate the set current with the wire feed speed WS3 in the backward direction, that is, the velocity amplitude WV2 in the backward direction. Wire-feed velocity amplitude controller 16 determines the wire feed speed WS3 in the backward direction, that is, the velocity amplitude WV2 in the backward direction based on the set current set by welding condition setting unit 18. The relation between the set current and the wire feed speed WS3 in the backward direction, that is, the velocity amplitude WV2 in the backward direction can be predetermined by, for example, experiments.

Wire-feed velocity amplitude controller 16 determines the velocity amplitude WV1 in the forward direction by multiplying the determined velocity amplitude WV2 in the backward direction by a ratio smaller than 1. As a result, the velocity amplitude WV1 in the forward direction is smaller than the velocity amplitude WV2 in the backward direction. This ratio is determined based on at least one of the welding conditions set by welding condition setting unit 18, such as the set current; the diameter, the type, and the extension of the welding wire; and the shielding gas to be used. Wire-feed velocity amplitude controller 16, which includes a table or a mathematical formula to associate the ratio with the welding conditions set by welding condition setting unit 18, determines the ratio based on the welding conditions set by welding condition setting unit 18. The relation between the ratio and the welding conditions set by welding condition setting unit 18 can be predetermined by, for example, experiments.

Wire-feed speed/frequency controller 17 outputs the frequency of the periodic feeding of the welding wire in alternating forward and backward directions. Wire-feed speed/frequency controller 17, which includes a table or a mathematical formula to associate the set current with the frequency of the periodic feeding, determines the frequency based on the set current set by welding condition setting unit 18. The relation between the set current and the frequency can be predetermined by, for example, experiments.

Motor polarity switching controller 15, which has a time counting function, outputs a signal indicating the direction of rotation of wire feed motor 23 based on the frequency determined by wire feed speed/frequency controller 17 and the elapsed time. The direction of rotation corresponds to one of the forward and backward directions in which welding wire 19 is fed.

Basic wire feed speed WS1, the signal indicating the direction of rotation of wire feed motor 23, the velocity amplitudes WV2 and WV1 respectively in the backward and forward directions in which welding wire 19 is fed, and the frequency of the periodic feeding of welding wire 19 are determined based on the welding conditions set by welding condition setting unit 18 before welding is started.

Wire-feed-motor controller 13 controls wire feed motor 23 based on the basic wire feed speed WS1, the signal indicating the direction of rotation of wire feed motor 23, the velocity amplitudes WV2 and WV1 respectively in the backward and forward directions in which welding wire 19 is fed, and the frequency of the periodic feeding of welding wire 19. Thus, the arc welding device according to the present first exemplary embodiment controls the periodic feeding of welding wire 19 by controlling its feed speed in such a manner that the velocity amplitude is different between the forward and backward directions.

In this configuration, the ratio of the short circuit period to the arc period can be changed by controlling the wire feed speed in such a manner that the waveform to periodically feed welding wire 19 is different between the forward and backward directions with reference to the basic wire feed speed.

This provides a properly high welding voltage and a deep penetration of bead, thereby ensuring a large width of bead and a deep penetration of bead in the control of the periodic feeding of welding wire 19.

This also provides high welding performance including a large width of bead and a deep penetration of bead similar to that of short-circuit welding in which welding wire 19 is fed not periodically but constantly.

The ratio of the short circuit period to the arc period can be adjusted by setting the velocity amplitude in the forward direction to the product of the velocity amplitude in the backward direction and a ratio smaller than 1, thereby making the velocity amplitude smaller in the forward direction than in the backward direction. This provides a properly high welding voltage, thereby ensuring a large width of bead and a deep penetration of bead in the control of the periodic feeding of welding wire 19.

As shown in Fig. 2, in the short circuit period from the time t11 to the time t2, wire feed motor 23 that has received the signal from wire-feed-motor controller 13 reduces the feed speed of welding wire 19 to the wire feed speed WS3.

As shown in Fig. 2, in the arc period from the time t2 to the time t13, wire feed motor 23 that has received the signal from wire-feed-motor controller 13 accelerates the feed speed of welding wire 19 to the wire feed speed WS4.

The arc welding device according to the present first exemplary embodiment periodically alternates a short circuit period and an arc period by the above-described wire feed control. The components of the arc welding device can be formed separately or in combination.

As described above, in the arc welding device and the arc welding control method according to the present first exemplary embodiment, the velocity amplitude WV1 in the forward direction with reference to the basic wire feed speed WS1 is made smaller than the velocity amplitude WV2 in the backward direction. This can decrease the ratio of the short circuit period and increase the ratio of the arc period, thereby providing a properly high welding voltage and a deep penetration of bead.

The arc welding device and the arc welding control method can provide welding performance similar to that of the general short-circuit welding where the welding wire is fed not periodically but constantly, thereby ensuring a large width of bead and a deep penetration of bead.

### SECOND EXEMPLARY EMBODIMENT

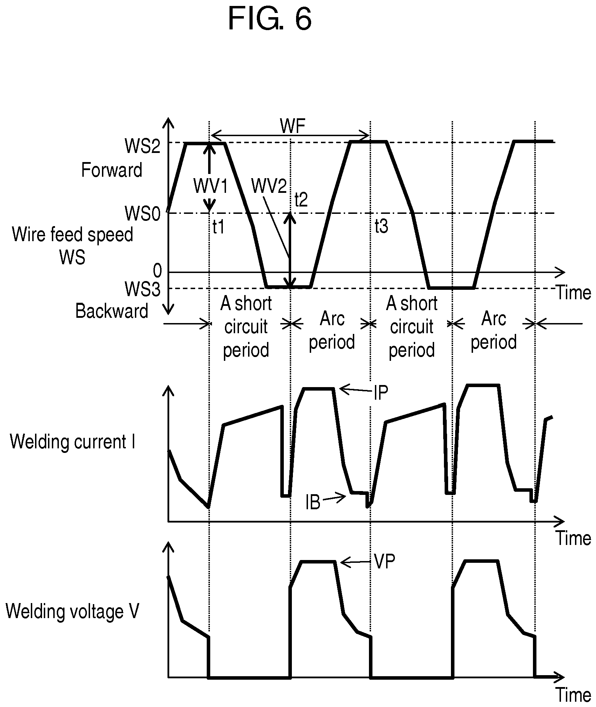

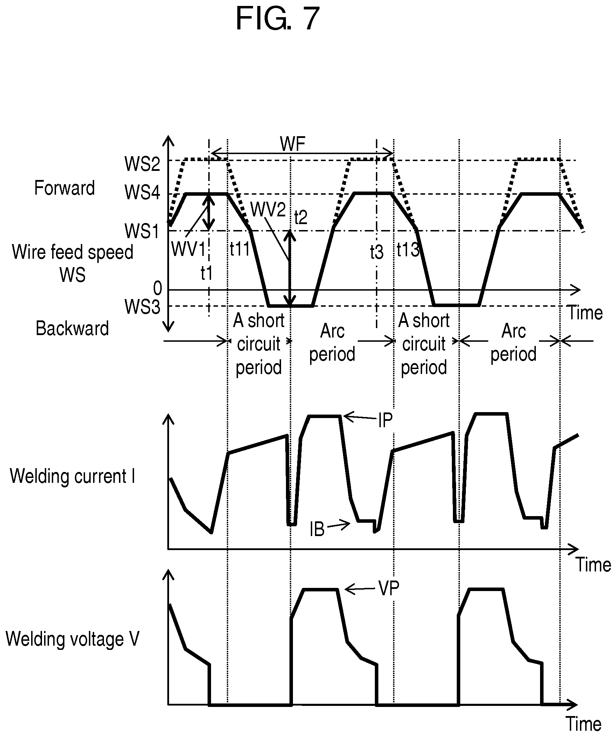

Fig. 6 shows time waveforms of a wire feed speed, a welding current, and a welding voltage in a conventional method of controlling the periodic feeding of a welding wire when wire 19 is fed at the same velocity amplitude between the forward and backward directions. Fig. 7 shows time waveforms of a wire feed speed, a welding current, and a welding voltage according to the second exemplary embodiment. Fig. 5 shows a schematic configuration of the arc welding device according to the second exemplary embodiment. The second exemplary embodiment differs from the first exemplary embodiment in that the waveform to feed the wire is not sinusoidal, but is trapezoidal.

In the control where a welding wire is fed in periodically alternating forward and backward direction at a predetermined frequency and a predetermined velocity amplitude with reference to the basic wire feed speed WS1, similar effects are obtained regardless of whether the waveform to feed the wire is trapezoidal or sinusoidal.

Fig. 6 shows time waveforms of the wire feed speed WS, the welding current I, and the welding voltage V in a conventional method of controlling the periodic feeding of a welding wire when the waveform to feed the wire is trapezoidal. Fig. 7 shows time waveforms of the wire feed speed WS, the welding current I, and the welding voltage V according to the second exemplary embodiment.

In the conventional control shown in Fig. 6, the short circuit period is from the time t1 to the time t2. In the case of the wire feed speed according to the present second exemplary embodiment shown in Fig. 7, the velocity amplitude WV1 in the forward direction is smaller than the velocity amplitude WV2 in the backward direction, and the wire feed speed WS4 is lower than the wire feed speed WS2. As a result, the occurrence of a short circuit is delayed from the time t1 to the time t11, allowing the short circuit period to last from the time t11 to the time t2, which is shorter than in the conventional control.

In the case of wire feed control according to the present second exemplary embodiment, the occurrence of a short circuit is delayed from the time t3 to the time t13, allowing the arc period to last from the time t2 to the time t13, which is longer than in the conventional control.

As a result, the ratio of the short circuit period to the arc period can be changed from 50:50 as in the conventional control to, for example, 30:70 as in the present second exemplary embodiment. Thus, making the velocity amplitude WV1 in the forward direction smaller than the velocity amplitude WV2 in the backward direction with reference to the basic wire feed speed WS1 can change the ratio of the short circuit period to the arc period. This provides a properly high welding voltage and a deep penetration of bead.

Welding wire 19 can be fed in such a manner that the waveform to feed welding wire 19 is changed sinusoidally or trapezoidally with reference to the basic wire feed speed so as to provide a properly high welding voltage, thereby ensuring a large width of bead and a deep penetration of bead.

This arc welding device can have a configuration similar to the device of the first exemplary embodiment shown in Fig. 5. All the components of the arc welding device shown in Fig. 5 can be formed separately or in combination.

### INDUSTRIAL APPLICABILITY

The present invention controls the speed of periodic feeding of the welding wire in such a manner that the waveform to feed the wire can be different between the forward and backward directions with reference to the basic wire feed speed. Thus, the ratio of the short circuit period to the arc period can be changed in the control of the periodic feeding of the welding wire. The arc welding control method and the arc welding device according to the present invention in which the welding wire is fed periodically is industrially useful.

### REFERENCE MARKS IN THE DRAWINGS

- 1: input power
- 2: primary rectifier
- 3: switching unit
- 4: transformer
- 5: secondary rectifier
- 6: DCL
- 7: drive unit
- 8: welding voltage detector
- 9: welding current detector
- 10: short-circuit/arc detector
- 11: short-circuit controller
- 12: arc controller
- 13: wire-feed-motor controller
- 14: basic wire feed speed controller
- 15: motor polarity switching controller
- 16: wire-feed velocity amplitude controller
- 17: wire feed speed/frequency controller
- 18: welding condition setting unit
- 19: welding wire
- 20: chip
- 21: welding arc
- 22: object-to-be-welded
- 23: wire feed motor

## Claims

1. A consumable electrode arc welding control method in which short-circuit welding is performed by alternating short-circuits and arcs while a welding wire is fed automatically, the method comprising
determining a basic wire feed speed (WS1), the basic wire feed speed being set based on a set welding current;
**characterized in that** the method further comprises:
alternately generating a short-circuit state and an arc state by feeding the welding wire in periodically alternating forward and backward directions at a predetermined frequency and a predetermined velocity amplitude (WV1, WV2) with reference to the basic wire feed speed (WS1),
wherein an upper velocity amplitude (WV1) of the wire feed speed in the forward direction above the basic wire feed speed is smaller than a lower velocity amplitude (WV2) of the wire feed speed in the backward direction below the basic wire feed speed.

2. The arc welding control method of claim 1, wherein
a ratio of a short circuit period to an arc period is adjusted by setting the upper velocity amplitude to a product of the lower velocity amplitude and a ratio smaller than 1.

3. The arc welding control method of claim 2, wherein
the ratio is determined based on at least one of a set welding current, a diameter of the welding wire, a type of the welding wire, an extension of the welding wire, and shielding gas to be used.

4. The arc welding control method of any one of claims 1 to 3, wherein
the welding wire is fed in such a manner that the waveform to feed the welding wire is changed either sinusoidally or trapezoidal with reference to the basic wire feed speed.

5. An arc welding device alternately generating arcs and short circuits between an object-to-be-welded and a welding wire used as a consumable electrode, the arc welding device comprising:
a welding condition setting unit (18) for setting at least a set welding current;
a wire feed motor (23) for feeding the welding wire;
a switching unit (3) for controlling a welding output;
a welding voltage detector (8) for detecting a welding voltage;
a short-circuit/arc detector (10) for detecting whether a welding process is in a short-circuit state or in an arc state based on an output of the welding voltage detector;
a short-circuit controller (11) for outputting a welding output control signal indicating that the welding process is in the short-circuit state;
an arc controller (12) for outputting a welding output control signal indicating that the welding process is in the arc state;
a drive unit (7) for controlling the switching unit (3) based on one of the welding output control signal from the short-circuit controller (11) and the welding output control signal from the arc controller (12); and
a wire-feed-motor controller (13) for controlling the wire feed motor in such a manner that the welding wire is fed in periodically alternating forward and backward directions at a predetermined frequency and a predetermined velocity amplitude, wherein
the wire-feed-motor controller (13) comprises:
a basic wire feed speed controller (14) for outputting a basic wire feed speed based on the set current, the basic wire feed speed being a reference of a periodic feeding of the welding wire;
a motor polarity switching controller (15) for outputting a signal indicating a direction of rotation of the wire feed motor, the direction of rotation corresponding to one of the forward and backward directions in which the welding wire is fed;
a wire-feed velocity amplitude controller (16) for outputting a lower velocity amplitude of the wire feed speed in the backward direction below the basic wire feed speed, and an upper velocity amplitude of the wire feed speed in the forward direction above the basic wire feed speed smaller than the lower velocity amplitude of the wire feed speed below the basic wire feed speed; and
a wire feed speed/frequency controller (17) for outputting a wire feed frequency based on the set welding current, wherein
the wire-feed-motor controller (13) controls the wire feed motor based on the basic wire feed speed, the signal indicating the direction of rotation of the wire feed motor, the upper and lower velocity amplitudes in which the welding wire is fed, and the wire feed frequency, allowing the arc welding device to control a speed of periodic feeding of the welding wire in such a manner that a waveform to feed the welding wire is different between the upper velocity amplitude and
the lower velocity amplitude.

6. The arc welding device of claim 5, wherein
a ratio of a short circuit period to an arc period is adjusted by setting the upper velocity amplitude to a product of the lower velocity amplitude and a ratio smaller than 1.

7. The arc welding device of claim 6, wherein
the ratio smaller than 1 is determined based on at least one of a set welding current, a diameter of the welding wire to be used, a type of the welding wire, an extension of the welding wire, and shielding gas to be used.

## Patentansprüche

1. Lichtbogenschweißsteuerverfahren mit abschmelzender Elektrode, bei dem Kurzschlussschweißen durch abwechselnde Kurzschlüsse und Lichtbogen durchgeführt wird, während ein Schweißdraht automatisch zugeführt wird, wobei das Verfahren Folgendes umfasst:
Bestimmen einer Grund-Drahtzuführgeschwindigkeit (WS1), wobei die Grund-Drahtzuführgeschwindigkeit anhand eines eingestellten Schweißstroms eingestellt wird;
**dadurch gekennzeichnet, dass** das Verfahren ferner umfasst:
abwechselndes Erzeugen eines Kurzschlusszustands und eines Lichtbogenzustands durch periodisches Zuführen des Schweißdrahts in abwechselnde Vorwärts- und Rückwärtsrichtungen mit einer im Voraus bestimmten Frequenz und einer im Voraus bestimmten Geschwindigkeitsamplitude (WV1, WV2) in Bezug auf die Grund-Drahtzuführgeschwindigkeit (WS1),
wobei eine obere Geschwindigkeitsamplitude (WV1) der Drahtzuführgeschwindigkeit in der Vorwärtsrichtung oberhalb der Grund-Drahtzuführgeschwindigkeit niedriger ist als eine untere Geschwindigkeitsamplitude (WV2) der Drahtzuführgeschwindigkeit in der Rückwärtsrichtung unterhalb der Grund-Drahtzuführgeschwindigkeit.

2. Lichtbogenschweißsteuerverfahren nach Anspruch 1, wobei
ein Verhältnis einer Kurzschlussperiode zu einer Lichtbogenperiode durch Einstellen der oberen Geschwindigkeitsamplitude auf ein Produkt der unteren Geschwindigkeitsamplitude und eines Verhältnisses kleiner als 1 eingestellt wird.

3. Lichtbogenschweißsteuerverfahren nach Anspruch 2, wobei
das Verhältnis anhand von mindestens einem von einem festgelegten Schweißstrom, einem Durchmesser des Schweißdrahts, einem Typ von Schweißdraht, einer Ausdehnung des Schweißdrahts und einem zu verwendenden Schutzgas bestimmt wird.

4. Lichtbogenschweißsteuerverfahren nach einem der Ansprüche 1 bis 3, wobei
der Schweißdraht auf solche Weise zugeführt wird, dass die Wellenform zum Zuführen des Schweißdrahts in Bezug auf die Grund-Drahtzuführgeschwindigkeit entweder sinusförmig oder trapezförmig geändert wird.

5. Lichtbogenschweißvorrichtung, die abwechselnd Lichtbogen und Kurzschlüsse zwischen einem zu verschweißenden Gegenstand und einem Schweißdraht, der als Abschmelzelektrode verwendet wird, erzeugt, wobei die Lichtbogenschweißvorrichtung Folgendes aufweist:
eine Schweißbedingungseinstelleinheit (18) zum Einstellen mindestens eines eingestellten Schweißstroms;
einen Drahtvorschubmotor (23) zum Zuführen des Schweißdrahts;
eine Schalteinheit (3) zum Steuern einer Schweißleistung;
einen Schweißspannungsdetektor (8) zum Erfassen einer Schweißspannung;
einen Kurzschluss-/Lichtbogendetektor (10) zum Erfassen, anhand einer Ausgabe des Schweißspannungsdetektors, ob sich ein Schweißvorgang in einem Kurzschlusszustand oder in einem Lichtbogenzustand befindet;
eine Kurzschlusssteuerung (11) zum Ausgeben eines Schweißausgangssteuersignals, das anzeigt, dass sich der Schweißvorgang im Kurzschlusszustand befindet;
eine Lichtbogensteuerung (12) zum Ausgeben eines Schweißausgangssteuersignals, das anzeigt, dass sich der Schweißvorgang im Lichtbogenzustand befindet;
eine Antriebseinheit (7) zum Steuern der Schalteinheit (3) basierend auf einem vom Schweißausgangssteuersignal von der Kurzschlusssteuerung (11) und dem Schweißausgangssteuersignal von der Lichtbogensteuerung (12); und
eine Drahtzuführmotorsteuerung (13) zum Steuern des Drahtzuführmotors derart, dass der Schweißdraht in periodisch abwechselnden Vorwärts- und Rückwärtsrichtungen mit einer im Voraus bestimmten Frequenz und einer im Voraus bestimmten Geschwindigkeitsamplitude zugeführt wird, wobei
die Drahtzuführmotorsteuerung (13) umfasst:
eine Grund-Drahtzuführgeschwindigkeits-Steuerung (14) zum Ausgeben einer Grund-Drahtzuführgeschwindigkeit auf Basis des eingestellten Stroms, wobei die Grund-Drahtzuführgeschwindigkeit ein Referenzwert einer periodischen Zuführung des Schweißdrahts ist;
eine Motorpolaritäts-Umschaltsteuerung (15) zum Ausgeben eines Signals, das eine Drehrichtung des Drahtzuführmotors anzeigt, wobei die Drehrichtung einer der Vorwärts- und Rückwärtsrichtungen entspricht, in denen der Schweißdraht zugeführt wird;
eine Drahtzuführgeschwindigkeits-Amplitudensteuerung (16) zum Ausgeben einer unteren Geschwindigkeitsamplitude der Drahtzuführgeschwindigkeit in der Rückwärtsrichtung unterhalb der Grund-Drahtzuführgeschwindigkeit, und einer oberen Geschwindigkeitsamplitude der Drahtzuführgeschwindigkeit in der Vorwärtsrichtung oberhalb der Grund-Drahtzuführgeschwindigkeit, die kleiner ist als die untere Geschwindigkeitsamplitude der Drahtzuführgeschwindigkeit unterhalb der Grund-Drahtzuführgeschwindigkeit; und
eine Drahtzuführgeschwindigkeits-/Frequenzsteuerung (17) zum Ausgeben einer Drahtzuführfrequenz auf Basis des eingestellten Schweißstroms, wobei
die Drahtzuführmotorsteuerung (13) den Drahtzuführmotor anhand der Grund-Drahtzuführgeschwindigkeit steuert, wobei das Signal die Drehrichtung des Drahtzuführmotors, die oberen und unteren Geschwindigkeitsamplituden, in denen der Schweißdraht zugeführt wird, und die Drahtzuführfrequenz angibt, die der Lichtbogenschweißvorrichtung ein Steuern einer Geschwindigkeit der periodischen Zuführung des Schweißdrahtes in einer solchen Art und Weise ermöglicht, dass eine Wellenform zum Zuführen des Schweißdrahts zwischen der oberen Geschwindigkeitsamplitude und der unteren Geschwindigkeitsamplitude verschieden ist.

6. Lichtbogenschweißvorrichtung nach Anspruch 5, wobei ein Verhältnis einer Kurzschlussperiode zu einer Lichtbogenperiode eingestellt wird durch Einstellen der oberen Geschwindigkeitsamplitude auf ein Produkt der unteren Geschwindigkeitsamplitude und einem Verhältnis kleiner als 1.

7. Lichtbogenschweißvorrichtung nach Anspruch 6, wobei das Verhältnis kleiner als 1 anhand von mindestens einem von einem eingestellten Strom, einem Durchmesser des zu verwendenden Schweißdrahts, einem Typ des Schweißdrahts, einer Ausdehnung des Schweißdrahts und einem zu verwendenden Schutzgas bestimmt wird.

## Revendications

1. Procédé de commande de soudage à l'arc à électrode consommable dans lequel un soudage en court-circuit est effectué en alternant des courts-circuits et des arcs alors qu'un fil de soudage est avancé automatiquement, le procédé comprenant :
la détermination d'une vitesse d'avance de fil de base (WS1), la vitesse d'avance de fil de base étant établie sur la base d'un courant de soudage établi ;
**caractérisé en ce que** le procédé comprend en outre :
la génération alternativement d'un état de court-circuit et d'un état d'arc en avançant le fil de soudage dans des directions vers l'avant et vers l'arrière alternant périodiquement à une fréquence prédéterminée et une amplitude de vitesse (WV1, WV2) prédéterminée avec référence à la vitesse d'avance de fil de base (WS1),
dans lequel une amplitude de vitesse plus élevée (WV1) de la vitesse d'avance de fil dans la direction vers l'avant au-dessus de la vitesse d'avance de fil de base est inférieure à une amplitude de vitesse plus faible (WV2) de la vitesse d'avance de fil dans la direction vers l'arrière au-dessous de la vitesse d'avance de fil de base.

2. Procédé de commande de soudage à l'arc selon la revendication 1, dans lequel
un rapport entre une période de court-circuit et une période d'arc est ajusté en établissant l'amplitude de vitesse plus élevée à un produit de l'amplitude de vitesse plus faible et d'un rapport inférieur à 1.

3. Procédé de commande de soudage à l'arc selon la revendication 2, dans lequel
le rapport est déterminé sur la base d'au moins l'un d'un courant de soudage établi, d'un diamètre du fil de soudage, d'un type du fil de soudage, d'une extension du fil de soudage, et d'un gaz de protection à utiliser.

4. Procédé de commande de soudage à l'arc selon l'une quelconque des revendications 1 à 3, dans lequel
le fil de soudage est avancé d'une manière telle que la forme d'onde pour avancer le fil de soudage est changée soit sinusoïdalement, soit trapézoïdalement avec référence à la vitesse d'avance de fil de base.

5. Dispositif de soudage à l'arc générant alternativement des arcs et des courts circuits entre un objet à souder et un fil de soudage utilisé en tant qu'électrode consommable, le dispositif de soudage à l'arc comprenant :
une unité d'établissement de condition de soudage (18) pour établir au moins un courant de soudage établi ;
un moteur d'avance de fil (23) pour avancer le fil de soudage ;
une unité de commutation (3) pour commander une sortie de soudage ;
un détecteur de tension de soudage (8) pour détecter une tension de soudage ;
un détecteur de court-circuit/d'arc (10) pour détecter si un processus de soudage est dans un état de court-circuit ou dans un état d'arc sur la base d'une sortie du détecteur de tension de soudage ;
un contrôleur de court-circuit (11) pour sortir un signal de commande de sortie de soudage indiquant que le processus de soudage est dans l'état de court-circuit ;
un contrôleur d'arc (12) pour sortir un signal de commande de sortie de soudage indiquant que le processus de soudage est dans l'état d'arc ;
une unité de commande (7) pour commander l'unité de commutation (3) sur la base de l'un du signal de commande de sortie de soudage qui provient du contrôleur de court-circuit (11) et du signal de commande de sortie de soudage qui provient du contrôleur d'arc (12) ; et
un contrôleur de moteur d'avance de fil (13) pour commander le moteur d'avance de fil d'une manière telle que le fil de soudage est avancé dans des directions vers l'avant et vers l'arrière alternant périodiquement à une fréquence prédéterminée et à une amplitude de vitesse prédéterminée, dans lequel
le contrôleur de moteur d'avance de fil (13) comprend :
un contrôleur de vitesse d'avance de fil de base (14) pour sortir une vitesse d'avance de fil de base basée sur le courant établi, la vitesse d'avance de fil de base étant une référence d'une avance périodique du fil de soudage ;
un contrôleur de commutation de polarité de moteur (15) pour sortir un signal indiquant une direction de rotation du moteur d'avance de fil, la direction de rotation correspondant à l'une des directions vers l'avant et vers l'arrière dans lesquelles le fil de soudage est avancé ;
un contrôleur d'amplitude de vitesse d'avance de fil (16) pour sortir une amplitude de vitesse plus faible de la vitesse d'avance de fil dans la direction vers l'arrière au-dessous de la vitesse d'avance de fil de base, et une amplitude de vitesse plus élevée de la vitesse d'avance de fil dans la direction vers l'avant au-dessus de la vitesse d'avance de fil de base inférieure à l'amplitude de vitesse plus faible de la vitesse d'avance de fil au-dessous de la vitesse d'avance de fil de base ; et
un contrôleur de vitesse/fréquence d'avance de fil (17) pour sortir une fréquence d'avance de fil basée sur le courant de soudage établi, dans lequel
le contrôleur de moteur d'avance de fil (13) commande le moteur d'avance de fil sur la base de la vitesse d'avance de fil de base, le signal indiquant la direction de rotation du moteur d'avance de fil, les amplitudes de vitesse plus élevée et plus faible auxquelles le fil de soudage est avancé, et la fréquence d'avance de fil, permettant au dispositif de soudage à l'arc de commander une vitesse d'avance périodique du fil de soudage d'une manière telle qu'une forme d'onde pour avancer le fil de soudage est différente entre l'amplitude de vitesse plus élevée et l'amplitude de vitesse plus faible.

6. Dispositif de soudage à l'arc selon la revendication 5, dans lequel
un rapport entre une période de court-circuit et une période d'arc est ajusté en établissant l'amplitude de vitesse plus élevée à un produit de l'amplitude de vitesse plus faible et d'un rapport inférieur à 1.

7. Dispositif de soudage à l'arc selon la revendication 6, dans lequel
le rapport inférieur à 1 est déterminé sur la base d'au moins l'un d'un courant de soudage établi, d'un diamètre du fil de soudage à utiliser, d'un type du fil de soudage, d'une extension du fil de soudage, et d'un gaz de protection à utiliser.
